# EUROPÄISCHE PATENTSCHRIFT

(11) **EP 0 984 545 B1**
(45) Veröffentlichungstag und Bekanntmachung des Hinweises auf die Patenterteilung: **21.06.2006**
(21) Anmeldenummer: 99810765.0
(22) Anmeldetag: 26.08.1999
(51) Int. Cl.: H02K 9/06, H02K 5/20, B25F 5/00

(54) **Elektrowerkzeug**
Electric power tool
Outil électrique

(30) Priorität: 02.09.1998 DE 19839963
(43) Veröffentlichungstag der Anmeldung: 08.03.2000
(73) Patentinhaber: HILTI Aktiengesellschaft, 9494 Schaan (LI)
(72) Erfinder: Kristen, Ferdinand, 82205 Gilching (DE); Manschitz, Erwin, 82110 Germering (DE)
(74) Vertreter: Wildi, Roland

(56) Entgegenhaltungen:
- GB-A- 1 587 545
- SE-B- 442 841
- US-A- 3 517 755
- US-A- 3 718 193
- US-A- 4 276 941
- US-A- 5 052 479
- US-A- 5 099 160

## Beschreibung

Die Erfindung betrifft ein Elektrowerkzeug gemäss dem Oberbegriff des Patentanspruches 1.

Aufgrund der hohen Temperaturen die in einem Elektrowerkzeug, insbesondere einem Bohr- und Meisselgerät entstehen, ist es bekannt das Elektrowerkzeug mit einer Kühlvorrichtung zu versehen, um die Lebensdauer des Getriebes und des Antriebsmotors zu erhöhen.

Bei den meisten Elektrowerkzeugen sitzt das Lüfterrad auf der Kommutatorseite des Rotors. Die Kühlung funktioniert in der Weise, dass kalte Umgebungsluft über eine Ansaugöffnung im Gehäuse angesaugt und vorbei am Getriebe durch den Antriebsmotor strömt. Dadurch umspült die kalte Umgebungsluft zuerst das Getriebe, anschliessend den Antriebsmotor und wird über eine Ausblasöffnung im Gehäusedeckel des Antriebsmotors wieder ausgeblasen.

Der Nachteil dieser Kühlvorrichtung besteht darin, dass die kühle Umgebungsluft beim Vorbeiströmen am Getriebe aufgewärmt wird und dadurch den Antriebsmotor nicht mehr ausreichend kühlen kann. Ein weiterer Nachteil besteht darin, dass ein grosser Anteil Bohrstaub und Staubpartikel besonders bei Überkopfarbeiten durch die Ansaugöffnung in den Antriebsmotor gesaugt wird. Dadurch wird die Lebensdauer des Motors erheblich beeinträchtigt, da es zu einer Erosion am Rotor und Stator, hervorgerufen durch Staub bzw. Bohrklein, kommt.

Aus US-A-3 517 755 und GB-A-1 587 545 sind Elektrowerkzeuge bekannt, bei denen ein Lüfterrad an einem vom Getriebe abgewandten Endbereich des Antriebsmotors angeordnet ist. Luft wird in eine Ansaugöffnung und durch einen dem Antriebsmotor zugeordneten Luftkanal an das Lüfterrad gesaugt.

Aus der DE-196 00 339 ist ein Elektrowerkzeug bekannt, bei dem das Getriebe und der Antriebsmotor mit kühler Umgebungsluft getrennt und unabhängig voneinander gekühlt wird. Die kühle Umgebungsluft wird mittels eines Lüfterrades über zwei Ansaugöffnungen angesaugt, über zwei getrennte Luftkanäle über das Getriebe sowie den Antriebsmotor geführt und über zwei Ausblasöffnungen wieder ausgeblasen. Das Lüfterrad ist auf der Welle des Antriebsmotors zwischen dem Antriebsmotor und dem Getriebe angeordnet. Ein erster Luftkanal erstreckt sich durch das Getriebe bis zu einer ersten Seite des Lüfterrades und ein zweiter Luftkanal erstreckt sich durch den Antriebsmotor bis zu einer zweiten Seite des Lüfterrades. Das Lüfterrad weist auf beiden Seiten Lüftermittel in Form einzelner Flügel auf, wobei jedes der beiden Lüftermittel mit einem der beiden Luftkanäle zusammenwirkt.

Als besonders nachteilig wirkt sich bei diesem bekannten Elektrowerkzeug die Anordnung des Lüfterrades zwischen dem Antriebsmotor und dem Getriebe aus, da der zeitliche Arbeitsaufwand bei der Montage oder bei einem gegebenenfalls notwendigen Austausch des Lüfterrades sehr hoch ist. Weiters nachteilig wirken sich die Herstellkosten für das Lüfterrad aus, da dieses aus zwei Teillüftern besteht.

Der Erfindung liegt die Aufgabe zugrunde ein Elektrowerkzeug zu schaffen, das einfach ist im Aufbau sowie der Montage und eine sehr gute Kühlung des Getriebes, des Antriebsmotors und weiterer Teile des Gerätes gewährleistet.

Die Lösung dieser Aufgabe erfolgt durch ein Elektrowerkzeug, welches die im kennzeichnenden Abschnitt des Patentanspruchs 1 angeführten Merkmale aufweist.

Aufgrund der erfindungsgemässen Anordnung des Lüfterrades ist dieses bei der Montage oder beim Austausch leicht zugänglich, indem beispielsweise ein Gehäusedeckel entfernt wird. Dadurch, dass beide Luftkanäle auf einer Seite des Lüfterrades enden, ist das Lüfterrad nur auf einer Seite mit Lüftermitteln in Form einzelner Flügel ausgestattet. Im Gegensatz zu einem Lüfterrad mit Lüftermitteln an beiden Seiten ist das erfindungsgemässe Lüfterrad mit nur einem Lüftermittel auf einer Seite stabiler, laufgenauer und wirtschaftlicher herstellbar.

Da sich neben dem Getriebe auch das Schlagwerk erwärmen kann, ist vorzugsweise dem ersten Luftkanal nebst dem Getriebe auch das Schlagwerk zugeordnet. Die den ersten Luftkanal durchsetzende Kühlluft kann dadurch neben dem Getriebe auch das Schlagwerk kühlen.

Damit es bei Elektrowerkzeugen, die über eine im Gehäuse oder Handgriff angeordnete Elektronik verfügen, nicht zu Störungen aufgrund hoher Betriebstemperaturen des Elektrowerkzeuges kommt, ist zweckmässigerweise dem zweiten Luftkanal nebst dem Antriebsmotor auch die Elektronik zugeordnet, so dass die den zweiten Luftkanal durchsetzende Kühlluft sowohl den Antriebsmotor als auch die Elektronik kühlen kann.

Damit kühle Umgebungsluft möglichst im Bereich des Schlagwerkes in den ersten Luftkanal gesaugt werden kann, ist vorteilhafterweise die wenigstens eine Ansaugöffnung des ersten Luftkanals in einem bearbeitungsseitigen Endbereich des Elektrowerkzeugs angeordnet.

Um möglichst saubere Umgebungsluft dem Motor und der Elektronik zuführen zu können, ist zweckmässigerweise die wenigstens eine Ansaugöffnung des zweiten Luftkanals im Bereich des Handgriffes angeordnet. Die zweite Ansaugöffnung ist beispielsweise entgegen der Bearbeitungsrichtung offen und staubgeschützt ausgebildet.

Damit Bohrklein, insbesondere bei Überkopfarbeiten, nicht in die Luftkanäle gelangen kann, sind vorzugsweise die Ansaugöffnungen in Form von mehreren parallel nebeneinander angeordneten Schlitzen ausgebildet.

Die Erfindung wird anhand einer Zeichnung, die ein Ausführungsbeispiel wiedergibt, näher erläutert.

Das vereinfacht dargestellte Elektrowerkzeug ist ein Bohr- und Meisselgerät, das ein Gehäuse 1, einen einstückig mit dem Gehäuse 1 verbundenen Handgriff 2, einen im Handgriff angeordneten Betätigungsschalter 14, einen Werkzeughalter 13 sowie in dem Gehäuse 1 einen Antriebsmotor 11, ein Schlagwerk 9, ein zwischen dem Antriebsmotor 11 und dem Schlagwerk 9 angeordnetes Getriebe 10 sowie eine die Steuerung des Bohr- und Meisselgerätes unterstützende Elektronik 12 aufweist. Das Bohr- und Meisselgerät ist mittels einer elektrischen Leitung 15 mit einer externen Stromquelle verbindbar.

Im bearbeitungsseitigen Endbereich, in der Nähe des Werkzeughalters 13 ist eine erste Ansaugöffnung 5 eines ersten Luftkanals 3 angeordnet, der sich über das Schlagwerk 9 und das Getriebe 10 bis zu einem Lüfterrad 7 erstreckt, das auf einem dem Getriebe 10 gegenüberliegenden Abschnitt einer Welle des Antriebsmotors 11 angeordnet ist. Im Bereich des Handgriffes 2 befindet sich eine zweite Ansaugöffnung 6 eines zweiten Luftkanals 4, der sich über den Antriebsmotor 11 und die Elektronik ebenfalls bis zum Lüfterrad 7 erstreckt und ebenfalls wie der erste Luftkanal 3 auf einer dem Antriebsmotor 11 zugewandten Seite des Lüfterrades 7 endet.

Beide Luftkanäle 3, 4 sind bis zum Lüfterrad 7 voneinander getrennt, so dass jeweils für das Schlagwerk 9 und das Getriebe 10, sowie für den Antriebsmotor 11 und die Elektronik 12 kalte Umgebungsluft zur Verfügung steht. Mit dem Lüfterrad 7 wird die Luft aus dem ersten und dem zweiten Luftkanal vermischt und über wenigstens eine Ausblasöffnung 8 in einem Gehäusedeckel des Gehäuses 1 ausgeblasen.

Sowohl die erste Ansaugöffnung 5 als auch die zweite Ansaugöffnung 6 sind in Form von mehreren parallel nebeneinander angeordneten Schlitzen ausgebildet, durch die kein Bohrklein, sondern nur kühle Umgebungsluft eindringen kann.

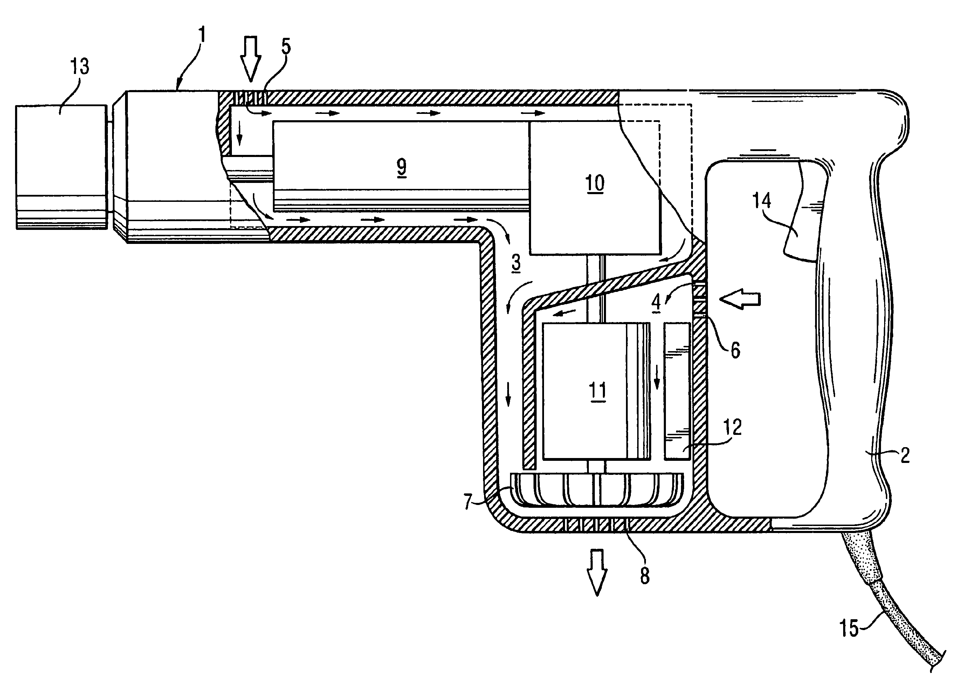

## Patentansprüche

1. Elektrowerkzeug mit einem Antriebsmotor (11), einem Schlagwerk (9), das über ein Getriebe (10) mit dem Antriebsmotor (11) in Verbindung steht, zwei getrennten, mit jeweils wenigstens einer Ansaugöffnung (5, 6) in Verbindung stehenden Luftkanälen (3, 4) und einem auf einer Welle des Antriebsmotors (11) angeordneten, mit einer Ausblasöffnung (8) in Verbindung stehenden Lüfterrad (7), wobei einem ersten Luftkanal (3) zumindest das Getriebe (10) und einem zweiten Luftkanal (4) zumindest der Antriebsmotor (11) zugeordnet ist, **dadurch gekennzeichnet dass** das Lüfterrad (7) an einem vom Getriebe (10) abgewandten Endbereich des Antriebsmotors (11) angeordnet ist und dass die beiden Luftkanäle (3, 4) auf einer dem Antriebsmotor (11) zugewandten Seite des Lüfterrades (7) enden.

2. Elektrowerkzeug nach Anspruch 1, **dadurch gekennzeichnet, dass** dem ersten Luftkanal (3) nebst dem Getriebe (10) auch das Schlagwerk (9) zugeordnet ist.

3. Elektrowerkzeug nach Anspruch 1 oder 2, **dadurch gekennzeichnet, dass** dem zweiten Luftkanal (4) nebst dem Antriebsmotor (11) auch eine Elektronik (12) zugeordnet ist.

4. Elektrowerkzeuge nach einem der Ansprüche 1 bis 3, **dadurch gekennzeichnet, dass** die wenigstens eine Ansaugöffnung (5) des ersten Luftkanals (3) in einem bearbeitungsseitigen Endbereich des Elektrowerkzeugs angeordnet ist.

5. Elektrowerkzeug nach einem der Ansprüche 1 bis 4, **dadurch gekennzeichnet, dass** die wenigstens eine Ansaugöffnung (6) des zweiten Luftkanals (4) im Bereich des Handgriffes (2) angeordnet ist.

6. Elektrowerkzeug nach einem der Ansprüche 1 bis 5, **dadurch gekennzeichnet, dass** die Ansaugöffnungen (5, 6) in Form von mehreren parallel nebeneinander angeordneten Schlitzen ausgebildet sind.

## Claims

1. Electric power tool with a drive motor (11), a punch (9) which is connected to the drive motor by a gear (10), two separate air ducts (3, 4) each connected to at least one intake port (5, 6) and a fan impeller (7) arranged on a shaft of the drive motor (11) and connected to an exhaust port (8), wherein at least the gear (10) is associated with a first air duct (3), and at least the drive motor (11) is associated with a second air duct, **characterised in that** the fan impeller (7) is arranged on an end region of the drive motor (11) facing away from the gear (10), and **in that** the two air ducts (3, 4) terminate on a side of the fan impeller (7) facing away from the drive motor (11).

2. Electric power tool according to Claim 1, **characterised in that** in addition to the gear (10), the punch (9) is also associated with the first air duct (3).

3. Electric power tool according to Claim 1 or 2, **characterised in that** in addition to the drive motor (11), electronics (12) are also associated with the second air duct (4).

4. Electric power tool according to one of Claims 1 to 3, **characterised in that** at least one intake port (5) of the first air duct (3) is arranged in an end region of the electric power tool on the machining side.

5. Electric power tool according to one of Claims 1 to 4, **characterised in that** at least one intake port (6) of the second air duct (4) is arranged in the region of the handle (2).

6. Electric power tool according to one of Claims 1 to 5, **characterised in that** the intake ports (5, 6) are designed in the form of several slots arranged in parallel with each other.

## Revendications

1. Outil électrique avec un moteur d'entraînement (11), un mécanisme de percussion (9) relié au moteur d'entraînement (11) par l'intermédiaire d'une transmission (10), deux canaux de ventilation séparés (3, 4) communiquant chacun avec au moins une ouverture d'aspiration (5, 6), et une roue de ventilation (7) disposée sur un arbre du moteur d'entraînement (11) et associée à une ouverture de sortie d'air (8), au moins la transmission (10) étant associée à un premier canal de ventilation (3) et au moins le moteur d'entraînement (11) étant associé à un second canal de ventilation (4), **caractérisé en ce que** la roue de ventilation (7) est disposée dans une zone d'extrémité du moteur d'entraînement (11) située à l'opposé de la transmission (10) et **en ce que** les deux canaux de ventilation (3, 4) aboutissent à un côté de la roue de ventilation (7) tourné vers le moteur d'entraînement (11).

2. Outil électrique selon la revendication 1, **caractérisé en ce qu'**en plus de la transmission (10) le mécanisme de percussion (9) est également associé au premier canal de ventilation (3).

3. Outil électrique selon la revendication 1 ou 2, **caractérisé en ce qu'**en plus du moteur d'entraînement (11) une électronique (12) est également associée au second canal de ventilation (4).

4. Outil électrique selon une des revendications 1 à 3, **caractérisé en ce que** l'ouverture d'aspiration (5), au nombre d'au moins une, du premier canal de ventilation (3) est disposée dans une zone d'extrémité de l'outil électrique située côté travail.

5. Outil électrique selon une des revendications 1 à 4, **caractérisé en ce que** l'ouverture d'aspiration (6), au nombre d'au moins une, du second canal de ventilation (4) est disposée dans la zone de la poignée (2).

6. Outil électrique selon une des revendications 1 à 5, **caractérisé en ce que** les ouvertures d'aspiration (5, 6) sont conçues sous la forme de plusieurs fentes parallèles juxtaposées.
